# EUROPÄISCHE PATENTSCHRIFT

(11) **EP 1 189 500 B1**
(45) Veröffentlichungstag und Bekanntmachung des Hinweises auf die Patenterteilung: **13.11.2002**
(21) Anmeldenummer: 01929379.4
(22) Anmeldetag: 01.03.2001
(51) Int. Cl.: A01G 9/10, A01G 9/02

(54) **PFLANZTOPF AUS KOKOSFASERN**
COCONUT FIBER PLANTING POT
POT DE PLANTATION EN FIBRES DE NOIX DE COCO

(30) Priorität: 28.04.2000 DE 20007748 U
(43) Veröffentlichungstag der Anmeldung: 27.03.2002
(73) Patentinhaber: Wibmer GmbH u. Co. Kommanditgesellschaft Papier - Formtechnik, D-72124 Pliezhausen (DE)
(72) Erfinder: WIBMER, Albert, 72760 Reutlingen (DE); WALZ, Reinhold, 71088 Holzgerlingen (DE)
(74) Vertreter: Wolff, Michael, Dipl.-Phys.
(86) Internationale Anmeldenummer: EP0102289
(87) Internationale Veröffentlichungsnummer: WO01082680

(56) Entgegenhaltungen:
- EP-A- 0 082 653
- DE-A- 19 516 572
- DE-A- 19 639 145
- DE-U- 9 113 876

## Beschreibung

Die Erfindung betrifft einen Pflanztopf gemäß gattungsbestimmendem Oberbegriff des Anspruches 1.

Es ist ein dieser Gattung angehörender Pflanztopf bekannt, dessen Stoff ein luftdichtes tiefgezogenes Trockenvlies mit Latex als imprägnierendem Kokosfasern-Bindemittel ist. Dieser relativ schwere, dickwandige und deshalb kaum durchwurzelbare sowie wegen des Latex schlecht im Erdreich verrottende Pflanztopf soll durch einen besseren gattungsgleichen Pflanztopf ersetzt werden.

Ein die vorgenannten Nachteile vermeidender erfindungsgemäßer Pflanztopf ist im Anspruch 1 gekennzeichnet. Ein luftdurchlässiges getrocknetes Nassvlies als Stoff hat den Vorteil, dass der Austritt wachsender Wurzeln der eingetopften Pflanze in das den Topf aufnehmende Erdreich wegen der vielen mehr oder weniger großen Löcher des Vliesstoffes fast ungehindert möglich ist, und dass dieser von Mikroorganismen im Erdreich störungsfrei biologisch abgebaut werden kann.

Zweckmäßige Ausgestaltungen des erfindungsgemäßen Pflanztopfes sind in den Ansprüchen 2 und 3 charakterisiert:
Ein geringer Anteil der als Bindemittel verwendeten teuren PVA-Fasern am Faserngemisch ist optimal, weil die Luftdurchlässigkeit des Vliesstoffes mit abnehmenden PVA-Anteil zunimmt.

Der erfindungsgemäße Pflanztopf kann gemäß Anspruch 4 dem eigenen Gebrauchsmuster DE 91 13 876 U1 nachgebildet sein,

Im Folgenden ist die Erfindung anhand der durch die Zeichnung beispielhaft dargestellten Ausführungsform des erfindungsgemäßen Pflanztopfes im Einzelnen erläutert.

Es zeigt:

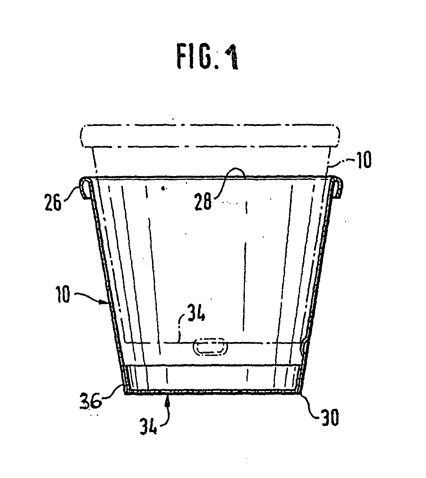

- Fig. 1: einen zentralen Vertikalschnitt durch die Ausführungsform mit Seitenansicht (strichpunktiert gezeichnet)
und

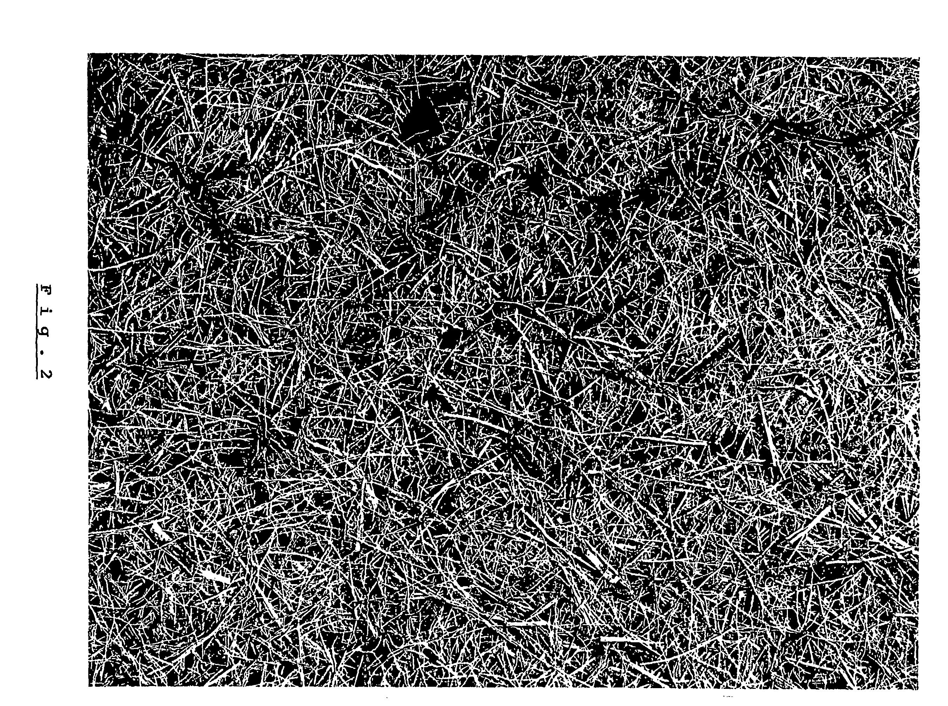

- Fig. 2: eine Draufsicht auf einen bei der Herstellung der Ausführungsform verwendbaren Vliesstoff (Blattform)

Im Ausführungsbeispiel besteht der erfindungsgemäße Pflanztopf wie bekannt (siehe DE 42 34 737 A1) aus einem kegelstumpfförmigen Mantel 10 mit Bördelung 26 an der großen öffnung 28 und aus einem pfannenförmigen Boden 34 mit hochgezogenem konischem Rand 36, der in die kleine öffnung 30 des Mantels geklebt ist.

Boden 34 und Mantel 10 bestehen aus einem einheitlichen Stoff, nämlich erfindungsgemäß aus einem luftdurchlässigen getrockneten Nassvlies, dessen Kokosfasern Polyvenylalkohol (PVA)-Fasern im Gewichtsverhältnis 1:10 zugemischt worden waren. Die PVA-Fasern dienen als Bindemittel, indem sie beim Trocknen des Nassvlieses geschmolzen werden, wobei sie überwiegend auf Klebestellen an sich kreuzenden Kokosfasern schrumpfen. Daneben verbleiben einige PVA-Fasern in mehr oder weniger unveränderter Gestalt; sie dienen bei der formschlüssigen Verbindung des Bodens 34 mit dem Mantel 10 als Klebemittel.

## Patentansprüche

1. Pflanztopf im Wesentlichen aus Kokosfasern-Vliesstoff mit einem Fasern-Bindemittel, **dadurch gekennzeichnet, dass** der Stoff ein luftdurchlässiges getrocknetes Nassvlies ist.

2. Pflanztopf nach Anspruch 1, **dadurch gekennzeichnet, dass** bei der Nassvlies-Herstellung den Kokosfasern Polyvenylalkohol (PVA)-Fasern als Bindemittel zugemischt worden sind, welche beim Trocknen des Nassvlieses geschmolzen und überwiegend auf Klebestellen an sich kreuzenden Kokosfasern geschrumpft sind.

3. Pflanztopf nach Anspruch 2, **dadurch gekennzeichnet, dass** der Anteil an Polyvenylalkohol-Fasern im dispergierten Faserngemisch mit Kokosfasern zwischen zehn und zwanzig Gewichtsprozente betragen hat.

4. Pflanztopf nach einem der Ansprüche 1 bis 3, dessen Boden (34) und Mantel (10) getrennt ausgebildet, einander überlappend zusammengefügt sowie in der überlappungszone unter Hitze- und Druckanwendung durch das Fasern-Bindemittel miteinander verklebt sind.

## Claims

1. Plant pot substantially consisting of coconut fibre fleece material with a fibre binder, **characterised in that** the material is a dried, air-permeable wet fleece.

2. Plant pot according to claim 1, **characterised in that**, for production of the wet fleece, polyvinylalcohol (PVA) fibres as binder have been admixed with the coconut fibres and on drying of the wet fleece are melted and shrunk predominantly to adhesive points at the intersecting coconut fibres.

3. Plant pot according to claim 2, **characterised in that** the proportion of polyvinylalcohol fibres in the dispersed fibre mixture with coconut fibres has amounted to between ten and twenty percent by weight.

4. Plant pot according to one of claims 1 to 3, the base (34) and circumferential wall (10) of which are formed separately, joined together in overlapping manner and glued together in the overlap zone by the fibre binder with use of heat and pressure.

## Revendications

1. Pot de plantation essentiellement en non tissé de fibres de noix de coco ayant un liant en fibres, **caractérisé en ce que** le non tissé est un non tissé en voie humide, perméable à l'air et séché.

2. Pot de plantation suivant la revendication 1, **caractérisé en ce que**, lors de la production du non tissé en voie humide, il est mélangé aux fibres de noix de coco des fibres d'alcool polyvinylique (PVA) qui servent de liant, qui sont fondues lors du séchage du non tissé en voie humide et qui se rétrécissent d'une manière prépondérante aux points de collage aux fibres de noix de coco qui s'entrecroisent.

3. Pot de plantation suivant la revendication 2, **caractérisé en ce que** la proportion de fibres d'alcool polyvinylique dans le mélange de fibres en dispersion avec des fibres de noix de coco est comprise entre dix et vingt pour cent en poids.

4. Pot de plantation suivant l'une des revendications 1 à 3, dont le fond (34) et la surface (10) latérale sont constitués d'une manière séparée, sont assemblés en se recouvrant l'un l'autre et sont collés l'un à l'autre par le liant à base de fibres dans la zone de recouvrement par application de chaleur et de pression.
